# EUROPEAN PATENT SPECIFICATION

(11) **EP 2 330 080 B1**
(45) Date of publication and mention of the grant of the patent: **23.05.2012**
(21) Application number: 10193197.0
(22) Date of filing: 30.11.2010
(51) Int. Cl.: C02F 1/00, A47J 31/60

(54) **A replaceable filter cartridge for percolation filter devices such as filter jugs and the like**
Austauschbare Filterpatrone für Tiefbettfiltervorrichtungen wie Filterkaraffen und dergleichen
Cartouche de filtre remplaçable pour dispositifs de filtre de percolation tels que les carafes à filtre et similaire

(30) Priority: 02.12.2009 IT PD20090365
(43) Date of publication of application: 08.06.2011
(73) Proprietor: Laica S.p.A., 36021 Barbarano Vicentino (VI) (IT)
(72) Inventor: Moretto, Maurizio, 36100, Vicenza (IT)
(74) Representative: Cantaluppi, Stefano

(56) References cited:
- EP-A1- 2 130 799
- DE-U1-202008 014 546

## Description

The invention relates to a replaceable filter cartridge for percolation filter devices such as filter jugs and the like.

In the relevant technical field there are known filter cartridges intended for use in what are known as percolation filter jugs, a cartridge of this type being fitted into the seat of a suitable separator (also known as a "hopper") to provide a calibrated flow of the liquid to be filtered through a filter bed, as e.g. described in EP 2 130 799.

These cartridges differ considerably in their technical features, particularly as regards the regularity and stability of the flow of the liquid to be filtered both in the initial phase and in the final phase of filtering, and also as regards their capacity for adaptation to the more widely used brands of jugs, but they all have a common drawback in that the geometrical and dimensional characteristics of the seat of the separator for which they are intended must be very precise to enable the cartridges to function correctly. In particular, these cartridges are only suitable for hoppers of a specified shape and geometry, since the functions of guiding the liquid to be filtered are provided with the assistance of passages formed at least partially by the assembly of the cartridge and hopper. Furthermore, these cartridges cannot operate with separators whose shape is different from that for which the cartridges are intended.

The principal object of the invention is to provide a filter cartridge of the replaceable type which has all the usual advantages and benefits of the aforementioned known cartridges, together with a capacity for adaptation to separators and hoppers in which the seats for receiving cartridges can have different shapes and geometries, provided that they have a common overall geometry which is required to ensure that the seal is liquid-tight.

This object is achieved with a cartridge made in accordance with the claims below.

The features and advantages of the invention will be made clearer by the following detailed description of a preferred, but non-exclusive, example of embodiment thereof, illustrated, for the purposes of guidance and without restrictive intent, with reference to the attached drawings, in which:
- Fig. 1 is a side view of a filter device provided with a filter cartridge made according to the present invention;
- Fig. 2 is a plan view from above of a filter cartridge made according to the present invention;
- Fig. 3 is a sectional view taken along the line II-II of Fig. 2;
- Fig. 4 is a side elevation of the cartridge of the preceding figures.

In the drawings, the number 1 indicates the whole of a replaceable filter cartridge for percolation filter devices such as filter jugs, infusers, cafetieres and the like. An apparatus of this kind typically includes a separator or hopper H which divides a jug J into an upper bowl UB, for containing the water to be filtered, and a lower bowl LB, for collecting the filtered water. The cartridge 1 is fitted into a seat S of the separator H in such a way that all the water to be filtered flows through the cartridge.

The cartridge 1 comprises an annular seal 2 which defines an upper part 3 and a lower part 4 of the cartridge with respect to the plane of the seal. When the cartridge 1 is fitted in the seat S, it engages an inner shell SH of this seat in a sealed way, thus forcing the water to be filtered to pass through the cartridge 1 in the way which is explained below.

A casing 5 extends from the seal in the lower part of the cartridge and contains a filter bed 6.

A supplementary casing 7 extends around the casing 5. The casing 5 and the supplementary casing 7 have corresponding shells 5a and 7a which are spaced apart from each other to form a gap 8 which is enlarged to form a chamber 9 at the base of the cartridge.

The gap 8 can extend continuously around the whole casing of the cartridge 1, or can be made in the form of a plurality of similar passages extending between the chamber 9 and the same number of supply apertures 10 located adjacent the seal 2 for the purpose of supplying the water to be filtered. More precisely, the supply apertures 10 are formed in a separator portion 21 extending around the casing 5, in a such way that the supply apertures 10 face the gap 8.

In all cases, the gap 8 and the corresponding passages, together with the supply apertures 10 and the chamber 9, form first channel means extending, outside the casing 5, between the seal 2 and a pair of grid-like inlet apertures 11 which are formed in the chamber 9 at the base of the casing 5 in such a way that the water to be filtered can enter the casing 5. The water to be filtered is guided through the inlet apertures 11 on one side of the filter bed 6, in such a way that it emerges in the filtered condition from the opposite side of the bed 6, having followed an upward path through the lower part of the cartridge towards the upper part thereof. Second channel means 12 extend from the inside of the casing, on the opposite side of the filter bed from the apertures 10, to at least one filtered fluid outlet aperture 13.

The second channel means comprise a tubular pipe 14 extending through the filter bed 6 between an upper part of the casing 5 and the outlet aperture 13. More precisely, the tubular pipe 14 extends from the proximity of top of the filter bed 6. A retaining member 15 in the form of a grid or the like is fitted to the top of the tubular pipe 14 to ensure that the granules from the filter bed 6 do not block the pipe 14.

A portion of the pipe 14 extends outside the casing 5 and the supplementary casing 7 in a recess 16 formed in the base of the cartridge 1; this portion has a flow reducer formed by a calibrated passage 17 having a smaller cross section than a remaining portion of said tubular pipe 14. This constriction relative to the cross section of the pipe 14 constantly regulates the outflow of the filtered water from the cartridge 1, thus also regulating the period of contact with the filter bed 6.

A portion of the pipe 14 projects into the recess 16, the extension of this portion being smaller than the depth (or height) of the recess, in such a way that the cartridge 1 can stand in a stable way on a flat surface.

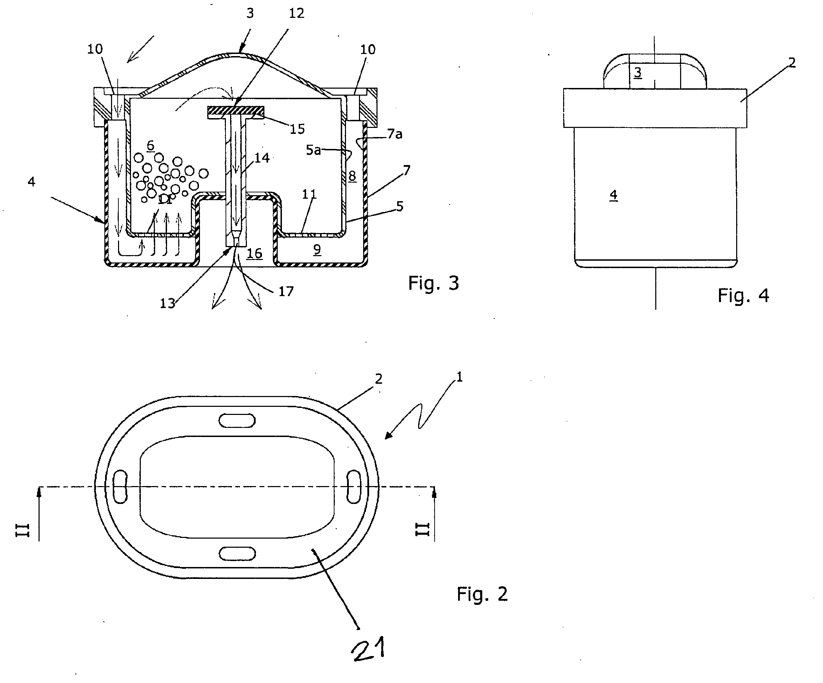

When a cartridge has been fitted into the seat S of the hopper H and the upper bowl UB of the jug has been filled, the flow of the water to be filtered is as follows. The water to be filtered flows through the apertures 10 into the gap 8 and reaches the chamber 9. From here, it flows through the inlet apertures 11 and through the filter bed 6 until it reaches the top of the bed, in the proximity of the retaining grid 15. As it can be notice in Fig. 2, the upper part of the casing 5, in which the retaining grid 15 is located, is in communication with the upper part 3 of the cartridge so that the water from the top of the bed flows through both these parts toward the retaining grid 15. Therefore, the water, which has now been filtered, can descend in the tubular pipe 14 with its flow calibrated by the passage 17, and comes out of the outlet aperture 13 to be collected in the lower basin LB of the jug C.

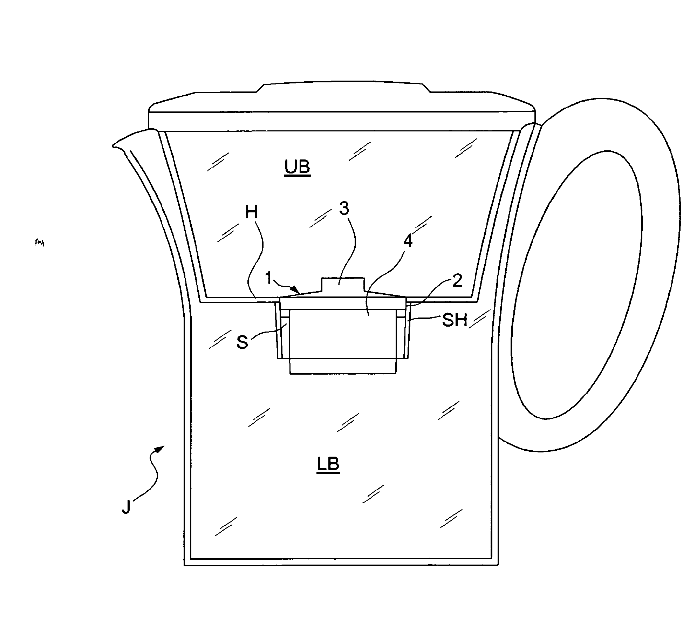

It will be appreciated that the cartridge 1 can operate either with a hopper having a closed seat in the form of a cup with an aperture at the bottom, or with a hopper having an open seat in the form of a simple annular strip, such as the one of Fig. 1, without thereby losing any of its advantages in terms of filtering or flow regulation. This is because the regulation of the flow is provided by means which are entirely contained within the cartridge itself, without any need for interaction between the geometry of the cartridge and that of its seat.

Thus the invention resolves the problem posed initially, by providing numerous advantages including a high degree of adaptability to different filter systems, particularly those systems in which the cartridge has to be housed in a seat of the separator. Furthermore, there is optimal regulation of the flow through the filter bed and satisfactory retention of the material of the filter bed, which therefore cannot contaminate the filtered water.

## Claims

1. A replaceable filter cartridge (1) of the type comprising an annular seal (2) suitable of being engaged in an inner shell (SH) of a cartridge seat (S) of a percolation filter device (J) such as filter jugs and the like, the annular seal (2) defining an upper part (3) and a lower part (4) in the cartridge (1) with respect to the plane of the seal (2), the cartridge (1) comprising:
- a casing (5) extending in the lower part (4) of the cartridge and containing a filter bed (6),
- first channel means (8, 9) outside the casing (5), extending between the seal (2) and at least one inlet aperture (11) through which the fluid to be filtered can enter the casing (5) on one side of the filter bed (6),
- second channel means (12) extending between the inside of the casing (5) on an opposite side of the filter bed (6) and at least one filtered fluid outlet aperture (13),
- wherein the first channel means (8, 9) comprise:
- at least one passage (8) extending between the upper and lower parts (3, 4) of the cartridge (1) outside said casing (5), **characterized in that**
- said at least one passage (8) is defined between said casing (5) and a supplementary casing (7) extending from said seal (2) and at least partially surrounding said casing (5), in such a way that said at least one inlet aperture (11) communicates through said at least one passage (8) with supply apertures (10) located adjacent to said seal (2) in a separator portion (21) extending around said casing (5) for the supply of water to be filtered,
- said second channel means (12) including a tubular pipe (14) extending through the filter bed (6) to said outlet aperture (13).

2. A replaceable filter cartridge (1) according to Claim 1, including retaining means (15) for retaining the filter material between the filter bed (6) and an entrance of the tubular pipe (14).

3. A replaceable filter cartridge (1) according to Claim 2, wherein said retaining means (15) are fitted on the top of said tubular pipe (14).

4. A replaceable filter cartridge (1) according to Claim 2 or 3, wherein the tubular pipe (14) comprises a flow reducer (17).

5. A replaceable filter cartridge (1) according to Claim 4, wherein said flow reducer (17) comprises a calibrated passage having a smaller cross section than a remaining portion of said tubular pipe (14).

6. A replaceable filter cartridge (1) according to any one or more of the preceding claims, wherein said at least one passage (8) extends between the supply apertures (10) and a chamber (9) located at the base of the cartridge (1).

7. A replaceable filter cartridge (1) according to any one or more of the preceding claims, wherein a portion of the tubular pipe (14) projects into a recess (16) defined at the base of the casing (5) and of the supplementary casing (7), the extension of said portion being smaller than the depth of the recess (16),.

8. A replaceable filter cartridge (1) according to claim 4 or 5 and claim 7, wherein said flow reducer (17) is provided in said recess (16).

9. A replaceable filter cartridge (1) according to any one or more of the preceding claims, wherein said seal (2) is formed integral with said separator portion (21).

10. A replaceable filter cartridge (1) according to any one or more of the preceding claims, wherein said supply apertures (10) are located facing said passage (8).

11. A replaceable filter cartridge (1) according to any one or more of the preceding claims, wherein said at least one passage (8) is defined by an annular gap formed between said casing (5) and said supplementary casing (7).

12. A replaceable filter cartridge (1) according to any one or more of the preceding claims, wherein said tubular pipe (14) extends from an upper part of said casing (5) in the proximity of the top of the filter bed (6).

## Patentansprüche

1. Austauschbare Filterpatrone (1) von dem Typ, der eine ringförmige Dichtung (2) aufweist, die zum Eingriff in eine innere Hülle (SH) eines Patronensitzes (S) einer Perkulationsfiltervorrichtung (J), wie z.B. Filterkaraffen und dergleichen, geeignet ist, wobei die ringförmige Dichtung einen oberen Teil (3) und einen unteren Teil (4) in der Patrone (1) bezüglich der Ebene der Dichtung (2) definiert, wobei die Patrone (1) Folgendes aufweist:
- ein Gehäuse (5), das sich in den unteren Teil (4) der Patrone erstreckt und ein Filterbett (6) enthält,
- eine erste Kanaleinrichtung (8, 9) außerhalb des Gehäuses (5), die sich zwischen der Dichtung (2) und zumindest einer Einlassöffnung (11) erstreckt, durch die das zu filternde Fluid in das Gehäuse (5) auf einer Seite des Filterbetts (6) eintreten kann,
- eine zweite Kanaleinrichtung (12), die sich zwischen der Innenseite des Gehäuses (5) auf einer gegenüberliegenden Seite des Filterbetts (6) und zumindest einer gefilterten Fluid-Auslassöffnung (13) erstreckt,
- wobei die erste Kanaleinrichtung (8, 9) Folgendes aufweist:
- zumindest eine Leitung (8), die sich zwischen den oberen und unteren Teilen (3, 4) der Patrone (1) außerhalb des Gehäuses (5) erstreckt,
**dadurch gekennzeichnet,**
- **dass** zumindest eine Leitung (8) zwischen dem Gehäuse (5) und einem zusätzlichen Gehäuse (7), das sich von der Dichtung (2) erstreckt und zumindest teilweise das Gehäuse (5) umschließt, in der Weise gebildet wird, dass die zumindest eine Einlassöffnung (11) durch die zumindest eine Leitung (8) mit Zuführöffnungen (10) in Verbindung steht, die benachbart zur Dichtung (2) in einem Abscheiderbereich (21) angeordnet sind, der sich um das Gehäuse (5) herum zur Zuführung des zu filternden Wassers erstreckt.
- **dass** die zweite Kanaleinrichtung (12) ein Rohr (14) umfasst, das sich durch das Filterbett (6) zur Auslassöffnung (13) erstreckt.

2. Austauschbare Filterpatrone (1) gemäß Anspruch 1, die eine Zurückhalteeinrichtung (15) zum Zurückhalten des Filtermaterials zwischen dem Filterbett (6) und einem Eingang des Rohres (14) umfasst.

3. Austauschbare Filterpatrone (1) gemäß Anspruch 2, wobei die Zurückhalteeinrichtung (15) auf dem oberen Teil des Rohrs (14) eingepasst ist.

4. Austauschbare Filterpatrone (1) gemäß Anspruch 2 oder 3, wobei das Rohr (14) einen Durchflussminderer (17) aufweist.

5. Austauschbare Filterpatrone (1) gemäß Anspruch 4, wobei der Durchflussminderer (17) eine kalibrierte Leitung mit einem kleineren Durchmesser als ein Restbereich des Rohres (14) aufweist.

6. Austauschbare Filterpatrone (1) gemäß einem oder mehreren der vorhergehenden Ansprüche, wobei sich zumindest eine Leitung (8) zwischen den Zuführöffnungen (10) und einer Kammer (9), die an der Basis der Patrone (1) angeordnet ist, erstreckt.

7. Austauschbare Filterpatrone (1) gemäß einem oder mehreren der vorhergehenden Ansprüche, wobei ein Bereich des Rohres (14) in eine Aussparung (16) hineinragt, die an der Basis des Gehäuses (5) und des zusätzlichen Gehäuses (7) definiert ist, wobei die Ausdehnung des Bereiches kleiner als die Tiefe der Aussparung (16) ist.

8. Austauschbare Filterpatrone (1) gemäß Anspruch 4 oder 5 und Anspruch 7, wobei der Durchflussminderer (17) in der Aussparung (16) vorgesehen ist.

9. Austauschbare Filterpatrone (1) gemäß einem oder mehreren der vorhergehenden Ansprüche, wobei die Dichtung (2) einstückig mit dem Abscheidebereich (21) ausgebildet ist.

10. Austauschbare Filterpatrone (1) gemäß einem oder mehreren der vorhergehenden Ansprüche, wobei die Zuführöffnungen (10) gegenüber der Leitung (8) angeordnet sind.

11. Austauschbare Filterpatrone (1) gemäß einem oder mehreren der vorhergehenden Ansprüche, wobei zumindest eine Leitung (8) durch eine ringförmige Aussparung, die zwischen dem Gehäuse (5) und dem zusätzlichen Gehäuse (7) gebildet ist, definiert wird.

12. Austauschbare Filterpatrone (1) gemäß einem oder mehreren der vorhergehenden Ansprüche, wobei sich das Rohr (14) von einem oberen Teil des Gehäuses (5) in die Umgebung des oberen Teils des Filterbetts (6) erstreckt.

## Revendications

1. Cartouche de filtre remplaçable (1) du type comprenant un joint d'étanchéité annulaire (2) approprié pour être mis en prise dans une coque interne (SH) d'un siège de cartouche (S) d'un dispositif de filtre de percolation (J) tels que des carafes à filtre et similaires, le joint d'étanchéité annulaire (2) définissant une partie supérieure (3) et une partie inférieure (4) dans la cartouche (1) par rapport au plan du joint d'étanchéité (2), la cartouche (1) comprenant :
un boîtier (5) s'étendant dans la partie inférieure (4) de la cartouche et contenant un lit de filtration (6),
des premiers moyens formant canal (8, 9) à l'extérieur du boîtier (5), s'étendant entre le joint d'étanchéité (2) et au moins une ouverture d'entrée (11) à travers laquelle le fluide à filtrer peut entrer dans le boîtier (5) sur un côté du lit de filtration (6),
des deuxièmes moyens formant canal (12) s'étendant entre l'intérieur du boîtier (5) sur un côté opposé du lit de filtration (6) et au moins une ouverture de sortie de fluide filtré (13),
dans laquelle les premiers moyens formant canal (8, 9) comprennent :
au moins un passage (8) s'étendant entre les parties supérieure et inférieure (3, 4) de la cartouche (1) à l'extérieur dudit boîtier (5),
**caractérisée en ce que** :
ledit au moins un passage (8) est défini entre ledit boîtier (5) et un boîtier supplémentaire (7) s'étendant à partir dudit joint d'étanchéité (2) et entourant au moins partiellement ledit boîtier (5) de sorte que ladite au moins une ouverture d'entrée (11) communique par le biais dudit au moins un passage (8) avec des ouvertures d'alimentation (10) positionnées de manière adjacente audit joint d'étanchéité (2) dans une partie de séparateur (21) s'étendant autour dudit boîtier (5) pour l'alimentation de l'eau à filtrer,
lesdits deuxièmes moyens formant canal (12) comprenant un tuyau tubulaire (14) s'étendant à travers le lit de filtration (6) jusqu'à ladite ouverture de sortie (13).

2. Cartouche de filtre remplaçable (1) selon la revendication 1, comprenant des moyens de retenue (15) pour retenir le matériau de filtre entre le lit de filtration (6) et une entrée du tuyau tubulaire (14).

3. Cartouche de filtre remplaçable (1) selon la revendication 2, dans laquelle lesdits moyens de retenue (15) sont montés sur la partie supérieure dudit tuyau tubulaire (14).

4. Cartouche de filtre remplaçable (1) selon la revendication 2 ou 3, dans laquelle le tuyau tubulaire (14) comprend un réducteur de débit (17).

5. Cartouche de filtre remplaçable (1) selon la revendication 4, dans laquelle ledit réducteur de débit (17) comprend un passage calibré ayant une plus petite section transversale qu'une partie résiduelle dudit tuyau tubulaire (14).

6. Cartouche de filtre remplaçable (1) selon l'une quelconque ou plusieurs des revendications précédentes, dans laquelle ledit au moins un passage (8) s'étend entre les ouvertures d'alimentation (10) et une chambre (9) positionnée à la base de la cartouche (1).

7. Cartouche de filtre remplaçable (1) selon l'une quelconque ou plusieurs des revendications précédentes, dans laquelle une partie du tuyau tubulaire (14) fait saillie dans un évidement (16) défini à la base du boîtier (5) et du boîtier supplémentaire (7), l'extension de ladite partie étant inférieure à la profondeur de l'évidement (16).

8. Cartouche de filtre remplaçable (1) selon la revendication 4 ou 5 et la revendication 7, dans laquelle ledit réducteur de débit (17) est prévu dans ledit évidement (16).

9. Cartouche de filtre remplaçable (1) selon l'une quelconque ou plusieurs des revendications précédentes, dans laquelle ledit joint d'étanchéité (2) est formé de manière solidaire avec ladite partie de séparateur (21).

10. Cartouche de filtre remplaçable (1) selon l'une quelconque ou plusieurs des revendications précédentes, dans laquelle lesdites ouvertures d'alimentation (10) sont positionnées en face dudit passage (8).

11. Cartouche de filtre remplaçable (1) selon l'une quelconque ou plusieurs des revendications précédentes, dans laquelle ledit au moins un passage (8) est défini par un espace annulaire formé entre ledit boîtier (5) et ledit boîtier supplémentaire (7).

12. Cartouche de filtre remplaçable (1) selon l'une quelconque ou plusieurs des revendications précédentes, dans laquelle ledit tuyau tubulaire (14) s'étend à partir d'une partie supérieure dudit boîtier (5) à proximité de la partie supérieure du lit de filtration (6).
